# EUROPEAN PATENT SPECIFICATION

(11) **EP 3 220 263 B1**
(45) Date of publication and mention of the grant of the patent: **03.11.2021**
(21) Application number: 16161030.8
(22) Date of filing: 18.03.2016
(51) Int. Cl.: G06F 9/445, G06F 9/455, G06F 8/61

(54) **EVALUATION FRAMEWORK FOR CLOUD READINESS OF VIRTUAL APPLIANCES TO ENFORCE THE SUITABILITY FOR AUTOMATED SELF-PROVISIONING**
AUSWERTUNGSRAHMEN FÜR CLOUD-BEREITSCHAFT VIRTUELLER VORRICHTUNGEN ZUR DURCHSETZUNG DER EIGNUNG ZUR AUTOMATISIERTEN EIGENSTÄNDIGEN BEREITSTELLUNG
STRUCTURE D'ÉVALUATION DE LA RÉCEPTIVITÉ D'UN NUAGE D'APPAREILS VIRTUELS POUR IMPOSER L'APTITUDE À UNE AUTO-FOURNITURE AUTOMATISÉE

(43) Date of publication of application: 20.09.2017
(73) Proprietor: Software AG, 64297 Darmstadt (DE)
(72) Inventor: WANNOWIUS, Paul, 64372 Ober-Ramstadt (DE); SCHÄFER, Thorsten, 55124 Mainz (DE); NAUMANN, Robert, 64395 Brensbach (DE)
(74) Representative: Bardehle Pagenberg Partnerschaft mbB Patentanwälte Rechtsanwälte

(56) References cited:
- US-A1- 2014 157 260
- None

## Description

### 1. Technical field

The present invention relates to a computer-implemented method, a system and a computer program product for analyzing the cloneability of a virtual machine within a cloud management platform.

### 2. The prior art

Virtual appliances (also referred to as virtual machines) are pre-configured software solutions designed for direct use which typically comprise an operating system and an installed application layer. In the context of cloud computing virtual appliances are often used as so-called "Blueprints" for delivering cloud services multifold in a fully automated manner. For this purpose, the appliances have to satisfy standards and requirements in order to ensure an error-free provision of cloud services of a reasonable quality. The process for ensuring such a "cloud readiness" requires a number of actions that are based on very specific expertise at various levels. An appliance may be transferred into several and sometimes heterogeneous cloud infrastructures and has to be configured according to specific policies. Additionally, it has to be checked for actual functionality as well as for the suitability for reproduction. Therefore, the process of Blueprint deployment is very complex in its entirety and may be embodied differently depending on the embedded context. Due to the lack of appropriate automation to support the process, in most cases it is associated with manual, time-consuming and error-prone efforts.

Techniques for deploying virtual appliances in the context of multi-cloud environments have been proposed in the prior art. For example, "Appliance management for federated cloud environments" by Mohammed Airaj et al. (Proceedings of the International Conference on Cloud Computing Technology and Science, CloudCom 1 (2013), S. 232-239. ISBN 978-0-7695-5095-4) proposes a central appliance management system (StratusLab Marketplace), which allows the management of meta information about virtual appliances within federated cloud environments (based on the StratusLab Cloud Distribution; see "Stratuslab Cloud Distribution" by Charles Loomis et al. (European Research Activities in Cloud Computing (2012)). With this platform users can offer appliances to other users for replication. To this end, the appliances first have to be transferred into a portable format and stored on a public network storage. Then, these formats can be referenced in the meta information. By means of the central and standardized management of the meta information any arbitrary StratusLab Cloud can access any registered appliance. To allow an instantiation within the target environment, the appliances have to be transferred into the cloud context where they can be stored for a repeated deployment. To this end, besides the correct format, the appliances have to be created in a manner such that they are compatible with an arbitrary IT infrastructure environment and such that they can reconfigure themselves if necessary (also referred to as Appliance Contextualization). Methods for an automated evaluation of the these properties, however, are not included in the StratusLab Marketplace. Rather, an endorsement concept is proposed for the qualitative evaluation of the appliances. Here, third parties validate an offered appliance with respect to certain criteria and can communicate their approval of the quality of this appliance, also with respect to its cloud readiness. Based on the number of endorsers or their reputation, interested users can then determine the extent to which the appliance meets their requirements.

In "An approach for virtual appliance distribution for service deployment" by Gabor Kecskemeti et al. (Future Generation Computer Systems 27 (2011), mar, No. 3, S. 280-289), the authors propose a service for supporting the creation of new appliances (Automated Virtual Appliance Creation Service, AVS) and for optimizing the distribution and deployment time of appliances within multiple cloud locations. The system supports the extraction of the file system of a virtualized source system into a transportable format. Then, the appliance can be uploaded to a special "active" repository directly, or it can be edited beforehand within a separate runtime environment, the so-called playground. AVS provides methods for optimizing the size of the appliance, for converting it into another virtualization format and for dividing the appliance into multiple logically connected partial packages. The division into partial packages is realized as a background process by the active repository with the aim of having to transfer only those packets of an appliance which are not already present at the target. In order to use a replicated appliance, it must be reassembled from the individual packets. To this end, not only the AVS but also a Virtual Machines Monitor (VMM) has to be installed on the physical host system. A proof of concept exists for a virtualization environment based on the Xen VMM. To realize the active repository, functions of the open-source cloud management platform Nimbus have been extended. Although AVS provides a supporting mechanism for extracting and optimizing virtual appliances so that they can be distributed quickly and efficiently, it does not address the aspect of (multi) cloud readiness. Thus, it is an implicit assumption that the replicated appliances meet all technical and organizational requirements of the target context and can "find their way" therein, such that an operation within the target context can occur correctly with respect to functional and policy-based requirements. This means, however, that no distinction between the requirements can be made, although they occur frequently in heterogeneous cloud environments.

Further prior art is presented e.g. in *"*A Scalable Approach to Deploying and Managing Appliances" by R. Bradshaw et al. (Teragrid 2007 Conference, Madison, Wi (2007), S. 1-6), *"*Typical Virtual Appliances: An optimized mechanism for virtual appliances provisioning and management" by T. Zhang et al. (Journal of Systems and Software 84 (2011), No. 3, S. 377-387), *"*Virtual machine image distribution network for cloud data centers" by C. Peng et al. (2012 Proceedings IEEE INFOCOM, IEEE, mar 2012. ISBN 978-1-4673-0775-8,181-189) and *"*Enterprise-scale cloud migration orchestrator" by J. Hwang et al. (2015 IFIP/IEEE International Symposium on Integrated Network Management (IM), IEEE, May 2015. ISBN 978-1-4799-8241-7, 1002-1007).

Patent application publication US 2014/0157260 A1 discloses methods and systems for virtual machine image migration. Files of a virtual machine image are received from a first environment. Points of variability are identified within the files, with respect to preparation for functioning in a second environment. The virtual machine image is reconfigured to function in the second environment. Such reconfiguring comprises adjusting the points of variability. The reconfigured image is deployed to the second environment.

However, all of the known mechanisms for multi cloud deployment of virtual appliances strongly dependent on the implementation of the particular cloud context (e.g. StratusLab Marketplace is designed only for the usage of StratusLab Cloud Distribution) or need extensive adaptations of the virtualization layer of the cloud infrastructure (e.g. the installation of the AVS software on the level of the VMM). Therefore, both of the above-described approaches cannot be used universally. In addition, they lack automated mechanisms for determining or ensuring that the virtual appliances meet the requirements of the target context so that they can be considered (multi) cloud ready.

It is therefore the technical problem underlying the present invention to provide an approach for efficiently determining whether a virtual machine can be cloned within a cloud management platform without producing erroneous behaviour and thereby at least partly overcoming the above explained disadvantages of the prior art.

### 3. Summary of the invention

This problem is according to one aspect of the invention solved by a computer-implemented method for determining whether a virtual machine can be cloned within a cloud management platform without causing erroneous behaviour as defined in claim 1.

Further advantageous embodiments of the method of the invention are defined in dependent claims 2-8.

The present invention also provides a system for determining whether a virtual machine can be cloned within a cloud management platform without causing erroneous behaviour in accordance with claim 9. Lastly, a computer program product is provided comprising instructions for implementing any of the above-described methods in accordance with claim 10.

### 4. Short description of the drawings

In the following detailed description, presently preferred embodiments of the invention are further described with reference to the following figures:
- Fig. 1:: A conceptual overview of parameter dependencies between the application layer and the operating system of a virtual machine;
- Fig. 2:: An optional process for preparing a virtual machine so that it can be evaluated by means of the evaluation process of embodiments of the present invention;
- Fig. 3:: A conceptual overview of an evaluation process according to an embodiment of the of the present invention;
- Fig. 4:: A flow chart of an embodiment of the characterization and individualization steps of Fig. 3;
- Fig. 5:: A flow chart of an embodiment of the analysis step of Fig. 3;
- Fig. 6:: A flow chart of an embodiment of the evaluation step of Fig. 3; and
- Fig. 7:: An architecture of a system for performing the processes illustrated in Figs. 3-6 according to an embodiment of the invention.

### 5. Detailed description

The so-called evaluation process disclosed herein addresses the problem of deciding whether a virtual machine (also referred to herein as "VM", "appliance" or "instance") can be cloned (i.e. replicated) by means of the methods provided by a given cloud management platform without causing erroneous behaviour. This involves two central aspects: On the one hand, it must be ensured that an instance which is a candidate for the set of blueprints can be individualized without errors from a technical point of view. In other words, the provisioning process of the cloud management platform must be able to operate in a reproducible and successful manner. On the other hand, an individualization of the instance must not impact the behaviour of the installed application layer from a functional point of view. This means that the individualized instances have to serve the same purpose as the original instance. If both of these requirements are met, the instance is cloud ready and can thus be used as a blueprint.

In particular, the second aspect is very difficult, since an appliance which has undergone considerable development efforts (e.g., a showcase or a training environment) oftentimes does not operate as originally intended after replication within a cloud environment and after the necessary individualization steps have been performed. Oftentimes, one reason for this relates to how the applications are installed and also to how the software is implemented. A central problem of the automated decision about the cloud readiness of an instance is that it cannot be forecasted in a straightforward manner how the installed applications will behave after an individualization of the instance and whether the behaviour still conforms to the desired behaviour. The desired behaviour of the installed application layer is always different, since specific application scenarios are addressed which differ from blueprint to blueprint - otherwise there would be no need for creating multiple blueprints. Although it is theoretically possible to specify individual formalized application-related policies for each blueprint candidate, this is not feasible in reality due to the extremely high manual effort. Therefore, it is not possible to arrive at a deterministic decision about the cloud readiness of instances on the basis of a rigid policy framework.

In view of the foregoing, the presently proposed evaluation process aims at realizing an as far as possible automated decision of the cloud readiness of a virtual machine, i.e. its ability to be cloned within a given cloud management platform without causing erroneous behaviour, with the help of so-called indications. Preferably, the present method follows and optimistic approach in that it is assumed that a given instance of a virtual machine can always be considered cloud ready with respect to a given application layer in case of doubt. During the evaluation process, it is checked whether this assumption can be falsified in that indications are searched for a possible erroneous behaviour of the installed applications which have a connection to the individualization of the instance. As a rule of thumb, such a behaviour occurs when configuration parameters of the application layer dependent on parameters of the operating system. Thus, if the operating system parameters change during the individualization of the instance, also the depending application parameters would have to change accordingly. However, since the re-configuration of very complex application layers typically cannot be handled by the standardized individualization methods provided by cloud management platforms, this is a main reason for the break in parameter dependency which causes a potential false behaviour of the application layer.

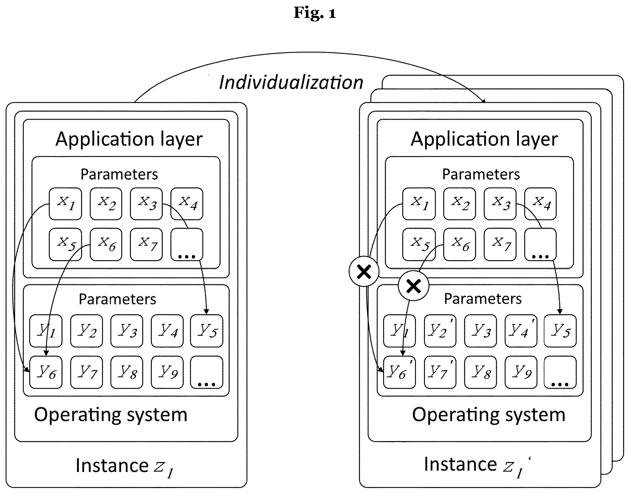

Fig. 1 illustrates this problem. As illustrated, the configuration parameters *x₁, x₃* and *x₆* of the application layer depend on the parameters *y₅* and *y₆* of the operating system.

This means that the parameters of the application layer have the same value as the respective parameters of the operating system, since they have been derived therefrom. For example, *y₆* may be the host name of the instance the value of which was used for configuration at the time of installation of the application layer and thus occurs in multiple places on the application layer (in the example: *x₁* and *x₆*). The same applies to the parameters *y₅* and *x₃*. During an individualization, however, the values of the operating system parameters can change (in the example: *y₂, y₄, y₆* and *y₇,* which change to *y₂', y₄', y₆'* and *y₇*')*,* so that a mismatch between the parameters can occur. In the example, the value of the operating system parameter *y₆* changes but the application parameters *x₁* and *x₆* still have their old value. This results in an indication for a potential erroneous behaviour within the application layer.

One particular challenge when searching for such indications is to find them within a reasonable amount of time. This is a difficult problem due to the manifold manner in which and where applications store their configurations (applications can store their configurations as files in (almost) any arbitrary location within the file system). Therefore, in theory, each and every file of the file system is a candidate location for information about the application configuration and would have to be analysed in order to identify indications. Furthermore, applications oftentimes store their configuration in syntactically different formats, e.g. text-oriented or binary. Therefore, each file would also have to be examined for different patterns to increase the probability of finding an indication. Further, since it is unknown which operating system parameters have dependencies in the first place, each file would have to be scanned for all candidate parameters.

In view of the above, identifying indications is a very complex problem which cannot be solved completely in an adequate amount of time. The present invention therefore proposes a trade-off to arrive at and as best as possible result within a relatively short period of time. For example, in certain embodiments explained in more detail below, not all files of an instance are scanned with all patterns relating to all operating system parameters, but only those aspects are considered which appear most relevant for the respective instance. In certain embodiments, the selection of these aspects can be made based on historical and/or statistic data which is primarily based on information about earlier evaluations of other instances. Such historical and/or statistic data can be stored in a database or other storage means and can generally also be extended with human experience. In certain embodiments of the present invention, it can be selected based on heuristic algorithms which aspects should be analysed (which files, with which search patterns, for which operating system parameters) based on the specific characteristics of the instance to be investigated.

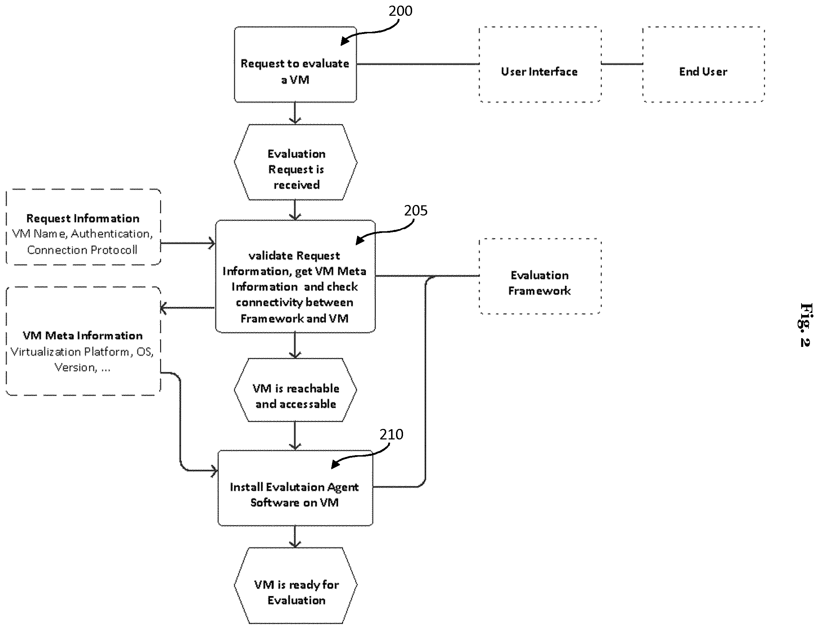

Fig. 2 illustrates an optional process for preparing a given virtual machine so that it can be evaluated by means of the evaluation process of the present invention. The process starts in step 200, where a user requests the evaluation via a (graphical) user interface by providing information about the virtual machine to be evaluated. The provided information may comprise any of the virtual machine's name, DNS, IP, the used connection protocol, such as SSH, WinRM, VMware Tools or the like, and/or authentication information, such as a username and password or one or more certificates. An evaluation framework of the present invention receives the evaluation request and validates the provided information in step 205 and checks its connectivity to the virtual machine. If the connection test is successful, the evaluation framework installs an evaluation agent on the host operating system of the virtual machine (step 210). Preferably, the VM meta information shown in Fig. 2 in connection with step 205 are aggregated from the request information or obtained from the VM after successful connection so that the framework of the invention has further information in order to install a compatible version of the evaluation agent. The evaluation agent is a software component which is used in subsequent steps for the communication between the evaluation framework and the virtual machine and which can execute processes on the virtual machine. Once the evaluation agent is successfully installed, the virtual machine is ready to be evaluated.

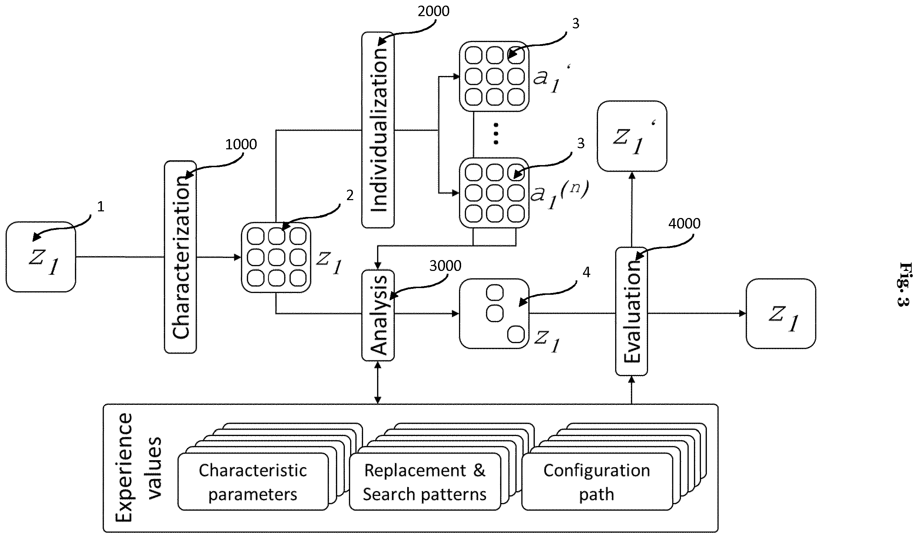

Fig. 3 illustrates a high-level conceptual overview of an evaluation process according to an embodiment of the present invention, which will be described in the following. The instance 1, i.e. the virtual machine to be evaluated, is generally denoted *z₁* (see the left hand side of Fig. 3). It will be understood by the person skilled in the art that certain method steps explained hereinafter in connection with Figs. 3-6 can be performed in a different order or even omitted completely according to various embodiments of the invention.

In the "characterization" step 1000, the instance 1 is described by a number of standardized properties in order to make the instance 1 comparable. To this end, characteristic properties of the instance 1, such as the type and/or version of the operating system, the installed applications and/or updates and/or the configuration of services and/or the network adapter, are read out, preferably by the evaluation agent. In addition or alternatively, other properties may be obtained from the instance 1 depending on the context. The collected information is formatted in a formal description language which results in a textual "image" comprising a set of properties 2 of the instance 1. In certain embodiments, it can be manually predetermined which properties are read out. The result of the evaluation will depend on the level of detail of the predetermined properties.

The subsequent "individualization" step 2000 serves two main purposes. On the one hand, it serves for testing whether the instance 1 is in a condition which allows a replication using the mechanisms provided by the used cloud management platform. To this end, it is "pretended" that the instance 1 was already a member of the set of blueprints of the cloud management platform. The instance 1 is, like any other blueprint, registered at the cloud management platform. Then, multiple test runs are performed by triggering the deployment process of multiple replications (i.e. clones) of the instance 1 using the cloud management platform. If no technical problems occur during the deployment, it can be concluded that the instance 1 can be replicated fully automatically from a technical point of view and thus is generally a blueprint candidate.

Generally, a given cloud management platform (e.g. VMware vRealize Automation or OpenStack) can typically use interfaces of various virtualization platforms (e.g. VMware vSphere, Citrix XenServer, MS Hyper-V) and/or cloud providers (e.g. AWS EC2) in order to create virtual machines, i.e. clones, based on templates (called blueprints herein, which originally were themselves virtual machines). From a technical point of view, such virtual machines are created as files in a file system. In its most simple form, two files are sufficient for representing a virtual machine, wherein the first file represents the virtual hard disk of the virtual machine and is typically referred to as virtual disk or virtual machine image, and the second file represents the meta data of the virtual machine in a declarative textual format. The latter specifies the virtual hardware components and their configuration.

During cloning, typically a 1-to-1 copy of the virtual hard disk is created and a new meta description file is generated. Accordingly, two independent virtual machines exist after the cloning which, however, host an identically configured host operating system. In order to make the systems distinguishable so that "individual" instances can be deployed, in its most simple form typically at least the host name of the system is changed (and in addition, in MS Windows a new SID may be defined). In addition, an individualization of a virtual machine may involve additional changes depending on the configuration and the used cloud management platform, the virtualization and/or cloud environment, the operating system and/or organizational requirements of the application context. From a technical point of view, this depends on the implementation of the cloud management platform and how it performs the individualization on the target system. Oftentimes, however, proprietary software is used to this end which has been pre-installed on a blueprint (e.g. in a Windows context: the de-facto standard is the "Sysprep" tool).

The framework of the present invention abstracts from the specific implementation of the mechanisms used for cloning by the used cloud management platform and the subsequent individualization. Rather, the present invention preferably uses an API (application programming interface) to create a new temporary blueprint which is then replicated by means of the mechanisms provided by the used cloud management platform. In this context, it is important to consider which operating system properties change during such a replication and individualization.

To figure out the changing properties, the present invention proposes to create multiple individualized clones of the given virtual machine and to compare their character with the original virtual machine. Multiple clones are necessary to exclude sporadic unintended property changes which would obscure the result of the individualization, e.g. temporary network problems, timeouts and/or errors during the individualization. Generally, the more clones (instances) are created the more reliable the result will be.

The following table shows an illustrative example of property changes during the course of a three-fold cloning of a virtual machine:

| **Property** | **VM** | **Clone 1** | **Clone 2** | **Clone 3** | **...** | **Changing property?** |
|---|---|---|---|---|---|---|
| *kernel* | windows | windows | windows | windows | ... | No |
| *kernelmajve rsion* | 6.3 | 6.3 | 6.3 | 6.3 | ... | No |
| *hostname* | win-jboss61-server | cloneo1 | win-jboss61-server (erroneous individualizat ion) | cloneo3 | ... | Yes (changed in most cases) |
| *ip* | 10.20.30.123 | Null (erroneous individualizat ion) | 10.20.30.125 | 10.20.30.126 | ... | Yes (changed in most cases) |
| *mac* | 00:XX:XX:X X:12:34 | 00:XX:XX:X X:56:78 | 00:XX:XX:X X:67:89 | 00:XX:XX:X X:78:90 | ... | Yes |

The number of clones to create may be predefined (wherein the inventors have found that at least three clones are recommended), or may be dynamically increased by the framework of the invention as long as for at least one property it cannot be decided whether it is changing or constant, i.e. until it can be determined with a sufficient confidence which properties are changing and which are constant.

The second purpose of the individualization is the preparation of the subsequent evaluation. The individualized replications (i.e. clones) of the instance 1 are characterized in the same manner as the instance 1 in the preceding step 1000, which results in respective sets of properties 3, which are denoted *a₁*' to *a₁⁽ⁿ⁾* in Fig. 3. Next, the sets of properties 2 and 3 are compared and those properties are identified which have changed when the instance 1 was individualized. This results in a set of changed properties (not shown in Fig. 3).

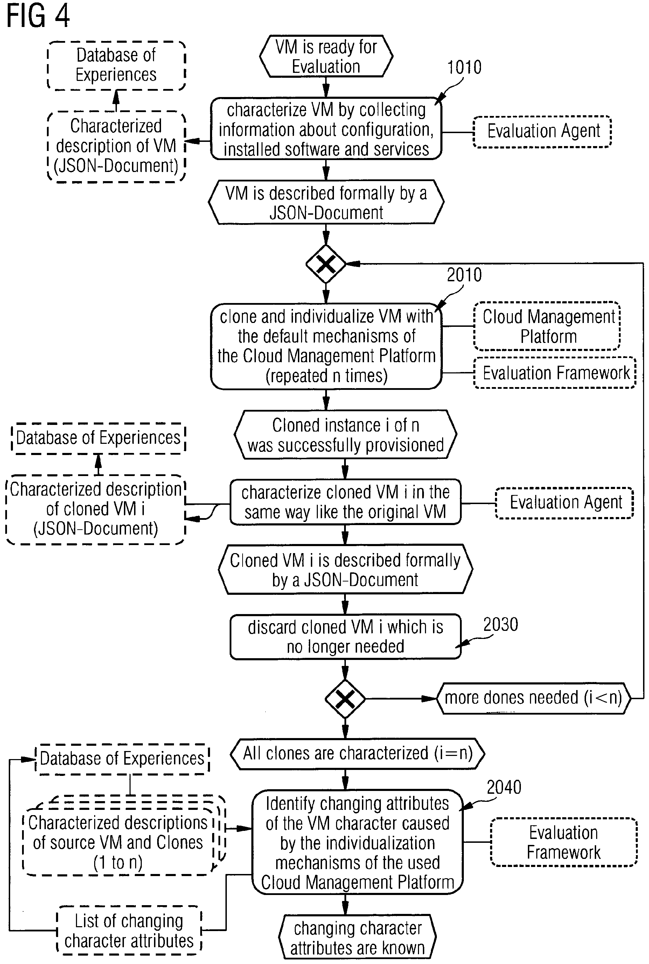

Fig. 4 illustrates a detailed flow chart of an embodiment of the above-described "characterization" and "individualization" steps 1000 and 2000 of Fig. 3. In step 1010, the evaluation agent collects the above-explained predetermined properties of the virtual machine 1 and generates the set of properties 2. In the example of Fig. 4, the set of properties 2 is stored in a text file, e.g. in JavaScript Object Notation (JSON) format. The following listing is an example of a characterized description of a virtual machine 1 in JSON format:

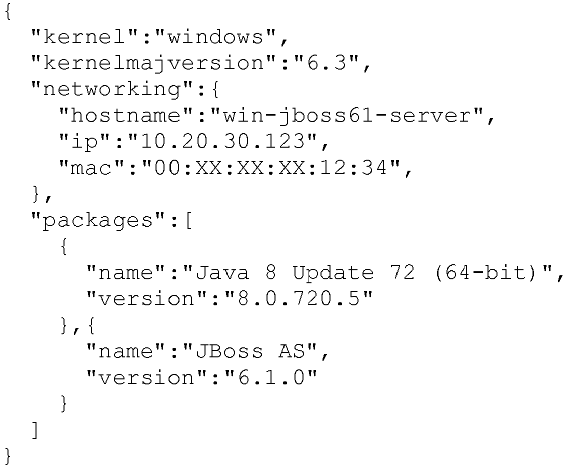

Apparently, the above example is simplified to serve for illustration purposes. In reality, arbitrary complex files can be created and processed by the present invention. The set of properties 2 is optionally stored in a database (denoted "database of experiences" in Fig. 4). In step 2010, the evaluation framework calls an API of the cloud management platform (such as Open Stack, vRealize Automation, or the like) to create multiple replications of the virtual machine 1. To this end, the standard individualization mechanisms of the cloud management platform are applied implicitly (i.e. as already described further above). In step 2020, each replication of the virtual machine 1 is analysed in the same manner as the original virtual machine 1, which results in sets of properties 3, as already explained above. In the example of Fig. 4, the sets of properties 3 are also stored in respective text files, preferably in JSON format, to make them comparable. The following three listings are examples of a characterized description in JSON format of three exemplary clones derived from the virtual machine 1:

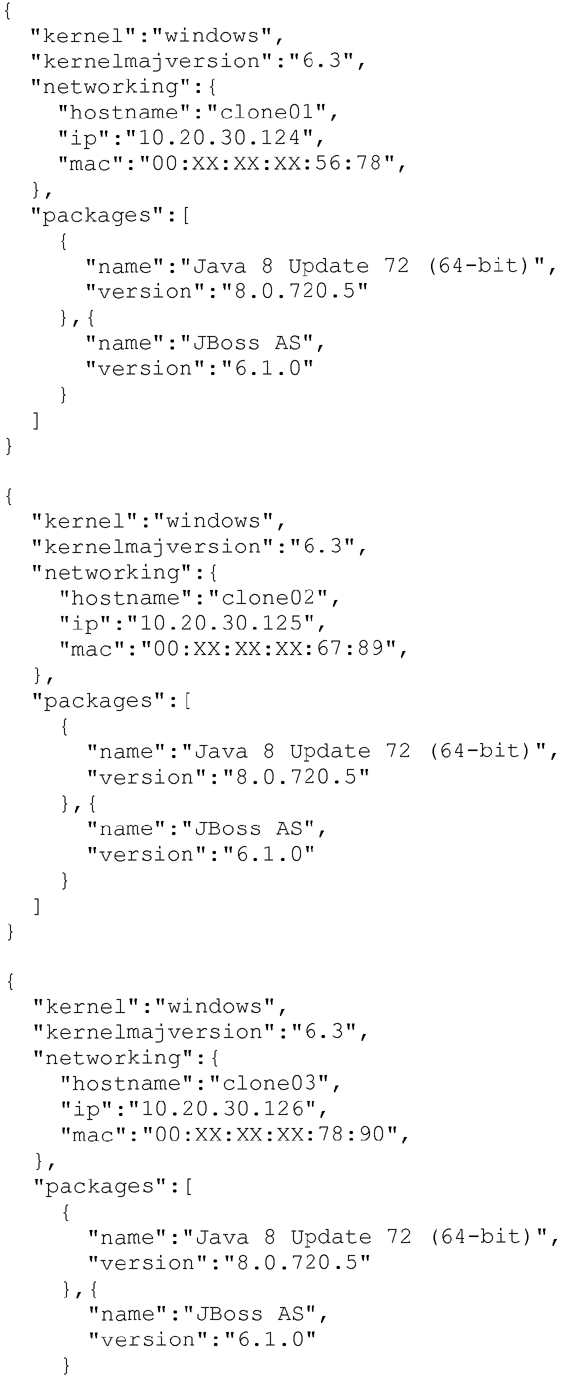

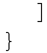

Also these sets of properties 3 may be stored in the database. The created replications are then discarded in step 2030. In step 2040, the sets of properties 2 and 3 are compared and those properties which have changed during individualization are identified. For example, a "Diff" may be performed in case the sets of properties 2 and 3 are stored in JSON format, as explained above. The resulting list of changed properties is preferably also in JSON format and may also be stored in the database. The following listing is an example of a list of changed properties derived based on the four sets of properties shown further above:

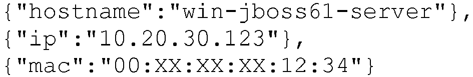

Returning to Fig. 3, the list of changed properties is the input for the "analysis" step 3000. First, the file system of the instance 1 is scanned and a list of configuration files (preferably including their paths) which potentially comprise configuration information of the instance 1's application layer is generated. The list of configuration files may be generated based on predefined patterns, such as patterns indicating relevant file names (e.g. *"all files whose file name includes 'config'"),* relevant file extensions (e.g. *"all files whose extension is '.xml"'*) and/or relevant paths (e.g. *"all files in the path '...*/*config*/*"'*). By means of such an initial heuristic filtering, many files are filtered out which based on their outer appearance do not likely contain any indications for an erroneous behavior of the application layer.

Even if the above filtering is applied, the list of configuration files typically still comprises a very large number of entries. In an illustrative example, a search for files with the extension ".xml" on a newly installed Windows Server 2008 R2 resulted in over 5,000 files, and even over 7,000 files on a Red Hat Enterprise Linux 6.5 system. To further reduce the list of configuration files, historical and/or statistical information from earlier evaluations of virtual machines may be used. The basic concept is to sort the list of configuration files such that files which comprise relevant indications with a high likelihood are on top of the list. A prerequisite for this optional refinement is that the data generated during the respective evaluation (such as the characteristic properties of the virtual machine, the properties which changed during the individualization, the list of all configuration files, places where indications were found and/or successful search patterns) is stored in a database, so that this data can be statistically evaluated. Such data can then be analyzed algorithmically with relatively simple methods or even complex data mining methods. Exemplary data mining methods include without limitation clustering and/or classification using a training set of already characterized virtual machines. As the person skilled in the art will appreciate, clustering (also known as cluster analysis) generally means partitioning a database into clusters (also referred to as segments or groups) so that the objects of a given cluster are as similar as possible, whereas objects from different clusters are as dissimilar. Suitable clustering techniques are disclosed e.g. in the Wikipedia article "Cluster analysis" (see https://en.wikipedia.org/wiki/Cluster_analysis) and may include without limitation connectivity-based clustering (hierarchical clustering), centroid-based clustering, distribution-based clustering and/or density-based clustering. Furthermore, classification generally comprises a preparatory step where objects of a training set are associated to one of a plurality of predefined classes. Then, a classificatory is trained which can associates future objects to one of the classes based on their properties. Suitable classification techniques are disclosed e.g. in the Wikipedia article "Statistical classification" (see https://en.wikipedia.org/wiki/Statistical_classification).

Once the list of configuration files has been created, it can be analyzed for possible indications. Preferably, the list of configuration files is processed sequentially and/or until a predetermined threshold value is reached. This way, the time behavior of the processing is deterministic. The threshold value may indicate a maximum amount of configuration files to process and/or a maximum time period. For each processed configuration file, the respective file is checked for the occurrence of specific values of at least one or the changed properties (based on the list of changed properties; see above). The check may be based on certain patterns, such as checking whether the configuration file comprises a string sequence including both the property name and the property value of one of the changed properties. Other patterns may only look for the property value. Still other patterns may look for similar but semantically equivalent parameter names. Examples of such patterns are provided further below. If an indication is found, it is added to a list of indications 4 (see Fig. 3) which preferably comprises an indication of the respective configuration file, the respective pattern and/or the respective property.

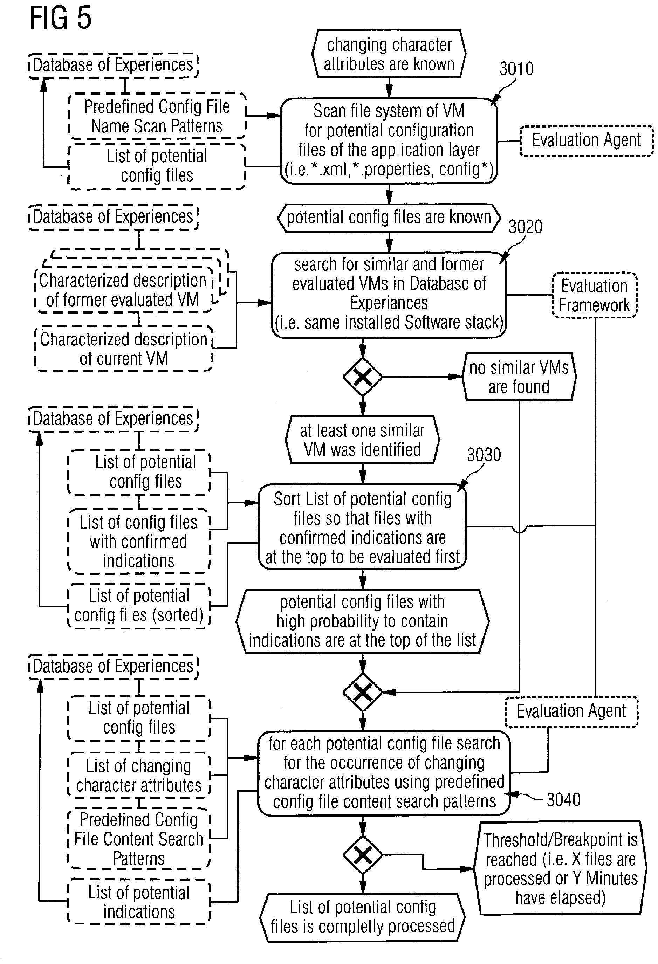

Fig. 5 illustrates a detailed flow chart of an embodiment of the above-described "analysis" step 3000 of Fig. 3. In step 3010, the evaluation agent scans the file system of the instance 1 for potential configuration files of the instance 1's application layer based on predetermined configuration file scan patterns. An exemplary definition of such patterns is illustrated in the following listing (again in the preferred JSON format):

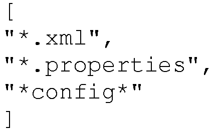

The result is a list of potential configuration files, as exemplarily illustrated in the following listing (again in the preferred JSON format):

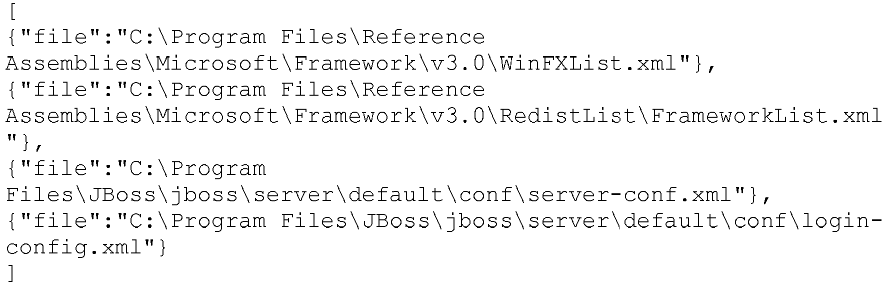

In step 3020, the evaluation framework performs a search on the database for similar virtual machines which have already been evaluated previously. The exemplary data mining techniques, including clustering and/or classification, which have been explained above may be used to this end. To this end, the formalized descriptions comprising the properties of such virtual machines, which have been preferably stored in the database (see above), can be used. Exemplary criteria for considering two virtual machines as sufficiently similar are that both have the same application layer installed, and/or that both have the same operating system with a similar application layer (potentially only in different versions).

Examples of formal descriptions of previously evaluated virtual machines are illustrated in the following listings:

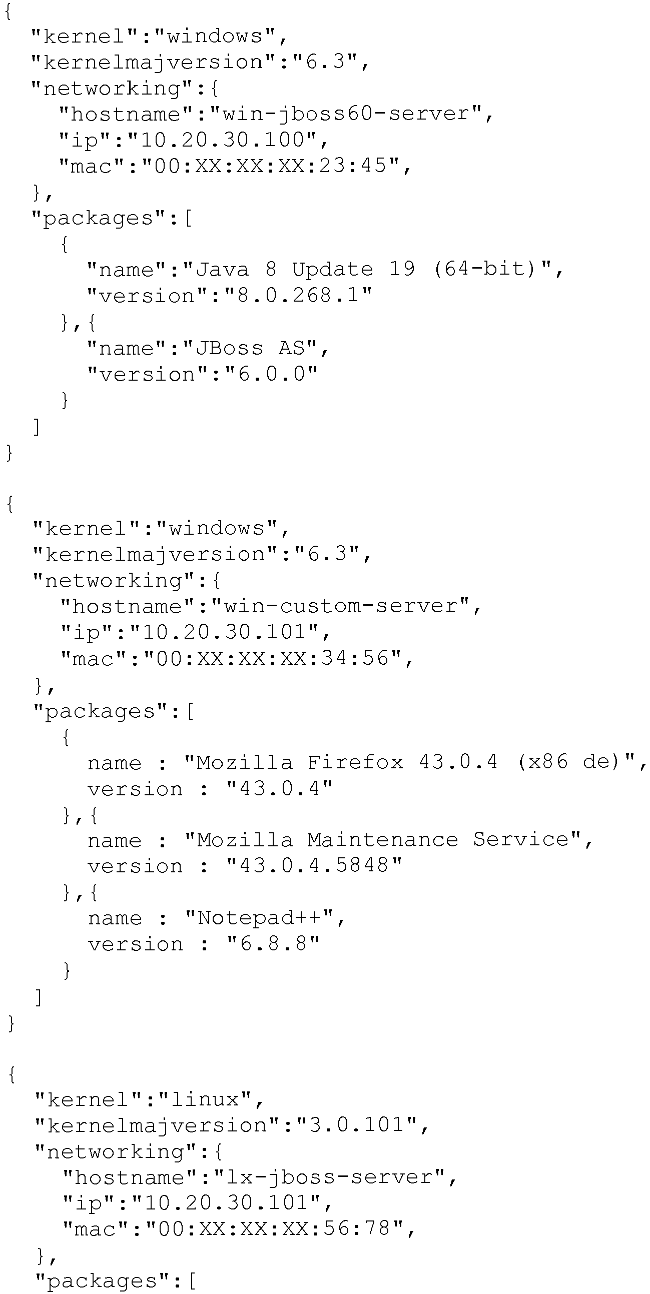

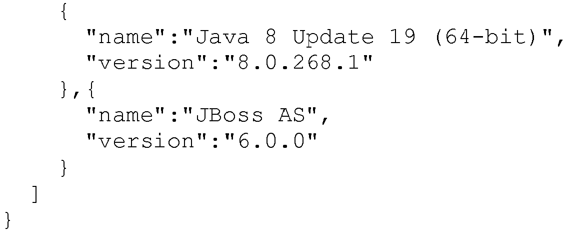

In the above example, the first previous virtual machine is considered similar to the virtual machine 1 currently under evaluation, since the operating system name and version matches, since JBoss AS is installed in a similar version, and since Java is installed in a similar version. The second and third previous virtual machine depicted above is not considered similar, since the second virtual machine has entirely different applications installed, and the third virtual machine has a different operating system.

If at least one similar earlier virtual machine was identified, the process moves to step 3030, where the list of potential configuration files is sorted so that configuration files with already confirmed indications are at the top of the list. In the example, the following listing illustrates a list of configuration files with confirmed indications from the above-explained first previous virtual machine:

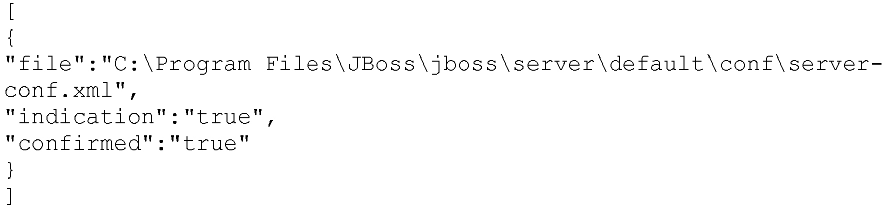

The sorted list of configuration files of the current virtual machine 1 then looks like this:

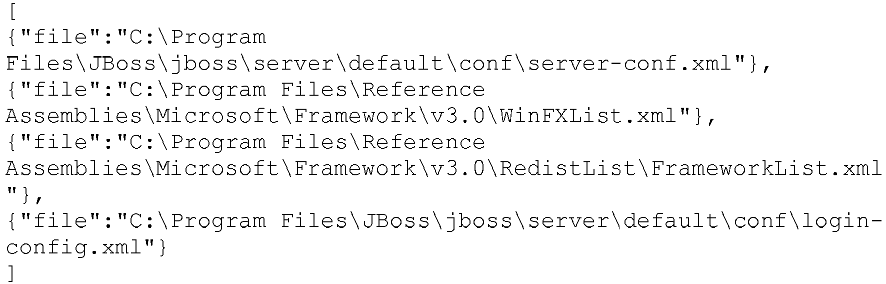

As can be seen, the list was sorted so that the entry relating to JBoss is on top.

The sorted list of configuration files is then sequentially processed in step 3040. Each configuration file is scanned one after the other for the occurrence of at least one changing property, as explained above. The output of step 3040 is a list of potential indications 4, as already explained above.

The following listing illustrates an exemplary predefined configuration file search pattern:

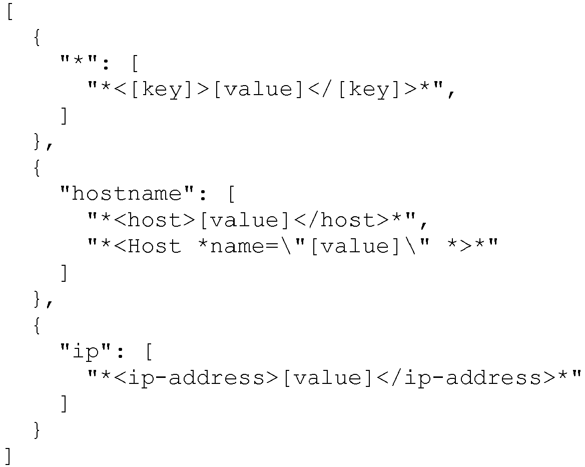

The above example is formulated in pseudo code and may be realized e.g. with regular expressions which have been omitted herein for the sake of simplicity.

The following is an exemplary listing illustrating a server-conf.xml file, i.e. the first configuration file in the list of configuration files (see above):

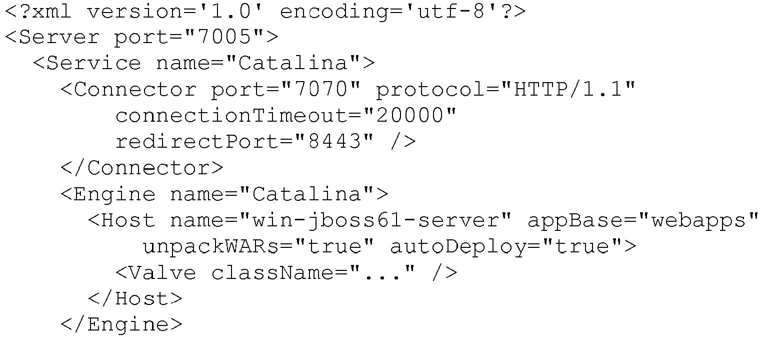

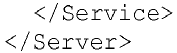

If the list of changed properties (see further above) is applied to the above configuration file using the search pattern shown above, the result is a match, since the configuration file comprises a "host" element with the "name" attribute "win-jboss61-server", which relates to one or the changing properties in the list of changing properties of the virtual machine 1.

Consequently, this configuration file is added to the list of potential indications 4. In the example, the following entry is added to the list of potential indications 4:

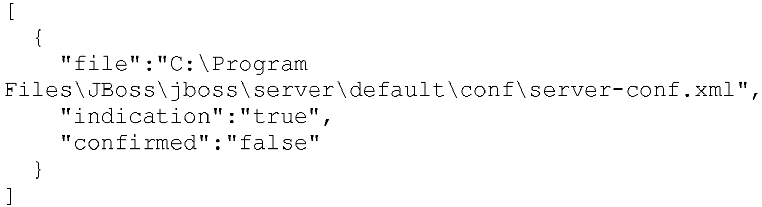

On the other hand, the following exemplar WinFXList.xml (which is the configuration file in position 2 of the list of potential configuration files) results in no match:

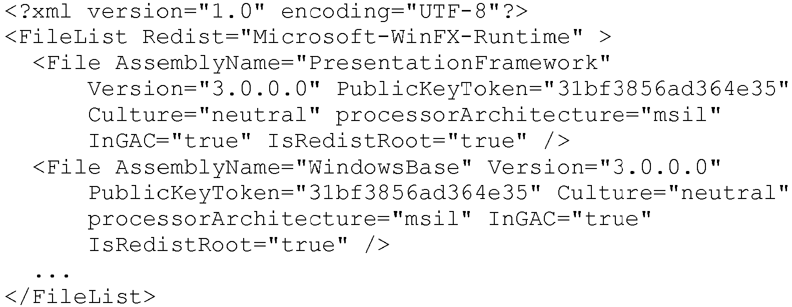

Preferably, the list of configuration files is processed until all configuration files have been processed, or until a predetermined threshold is reached (e.g. a maximum number of configuration files to process and/or a maximum amount of time).

Returning again to Fig. 3, the last phase in the overall process is the "evaluation" step 4000, which is performed based on the list of potential indications 4. If the list of potential indications 4 is empty, this means that no indications for a potential erroneous behaviour of the virtual machine 1 could be found and thus the application layer of the virtual machine 1 is considered cloud ready. The virtual machine 1 can thus be inserted into the set of blueprints of the particular cloud management platform. If, on the other hand, the list of potential indications 4 comprises at least one entry (as in the illustrative example above), the identified indications have to be evaluated. The evaluation may be performed by a human operator, so that the indication(s) can be confirmed or falsified with absolute certainty. The evaluation of the indication(s) - i.e. either confirmed or falsified - may then be stored in the database, so that it can be re-used for future evaluations of other virtual machines. In this case, a human intervention can be avoided, and the evaluation process can be performed fully automated (preferably after the given indication has been evaluated by a human for a predetermined number of times).

If at least one of the potential indications is confirmed, the application layer and thus the entire virtual machine 1 cannot be considered cloud ready, and it cannot be entered into the set of blueprints for the cloud management platform.

To remedy such a finding, certain embodiments provide an automated re-configuration of the application layer, preferably automatically after each individualization, to resolve any identified indication. To this end, a sequence of replacement instructions may be generated based on the knowledge obtained from the overall process. For example, for each configuration file with a confirmed indication, the old value of the affected property can be replaced with a new (individual) value, preferably identical to the characterization process explained further above and/or based on historical information. This way, a fully automated deployment of the instance 1 may be achieved using the mechanisms of the cloud management platform, so that the instance 1 can be entered into the set of blueprints despite the fact that the application layer of the instance 1 is in reality not cloud ready.

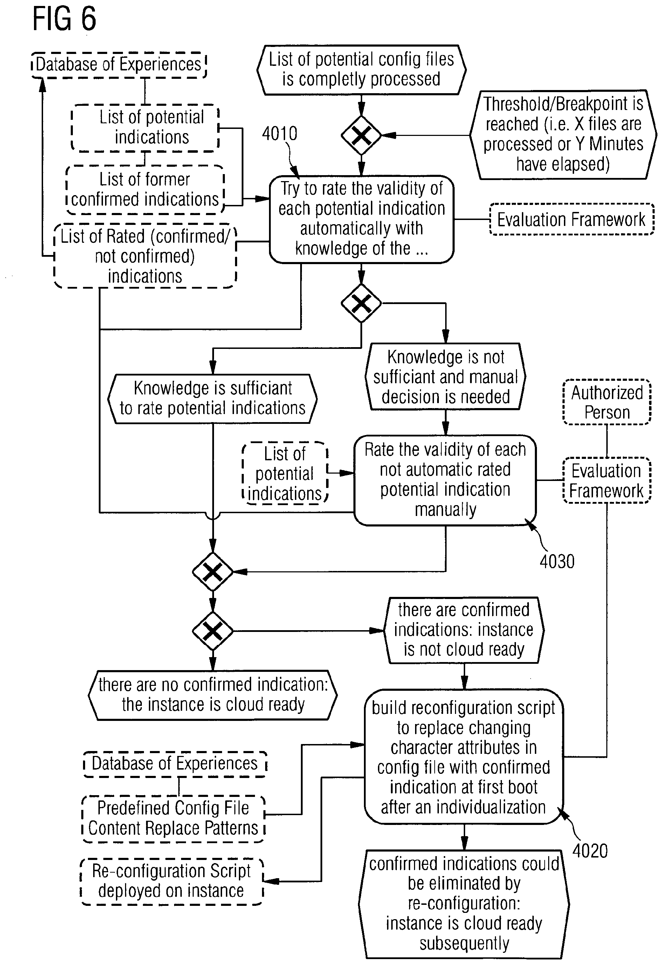

Fig. 6 illustrates a detailed flow chart of an embodiment of the above-described "evaluation" step 4000 of Fig. 3. In step 4010, the validity of each identified potential indication from the list of indications 4 is rated, preferably based on a list of former confirmed indications stored in the database. The following listing illustrates an exemplary former confirmed indication:

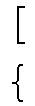

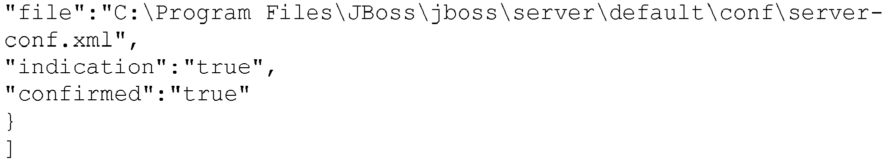

Based on a comparison of this exemplary former confirmed indication with the list of potential indications 4 (see further above), it is in this example determined that the indication can be set to "confirmed" fully automatically, i.e. the indication indicates an erroneous behaviour of the application layer of the instance 1 within the cloud management platform. Consequently, the instance 1 is marked as not cloud ready. In the other case, i.e. if the knowledge in the database is insufficient to evaluate the indication (i.e. to either confirm or falsify it), a manual evaluation of the indication may take place in step 4030, e.g. by means of a web portal provided by the evaluation framework, and the result thereof may be stored in the database for future use.

In any case, if an indication is confirmed, a re-configuration script may be built in step 4020 to replace the respective entry/entries in the affected configuration file at the first boot of the instance 1 after individualization. As a result, the instance 1 is cloud ready again. To this end, step 4020 preferably uses one or more predefined configuration file content replace patterns stored in the database.

The following is an exemplary listing of a configuration file content replacement pattern in pseudo code:

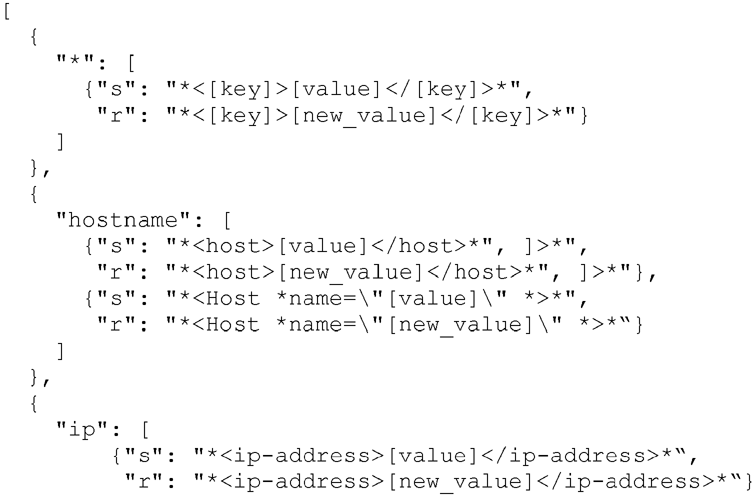

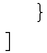

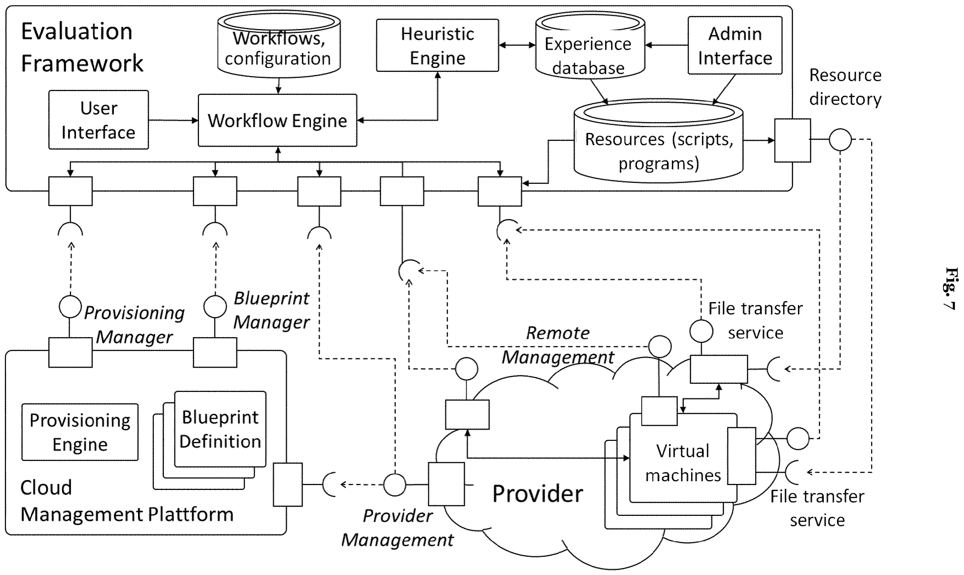

Fig. 7 illustrates an architecture of an embodiment of a system adapted for performing the above-described process.

In summary, embodiments of the methods and systems described herein provide the following technical advantages:
- Possibility of deciding the cloud readiness of a given virtual machine within a cloud management platform
   ∘ Testing the error-free provisioning and individualization of a virtual machine using the mechanisms of a cloud management platform (for example: provisioning of a pre-installed image of a Windows virtual machine via VMware vRealize Automation, on which Sysprep is executed upon the first boot).
   ∘ Evaluation whether the performed individualization has an impact on the application layer by searching for indications within the configuration files of the applications which indicate a break in parameter dependencies (for example: a start-up script of a web server includes a hard-coded host name of the virtual machine. During the individualization the host name of the virtual machine changes, but the host name stored in the start-up script remains, which is an indication that the web server will produce an erroneous behaviour upon start).
- Time efficient decision of the cloud readiness
   ∘ Targeted searching of indications based on historical and/or statistical knowledge ("which configuration files include indications with the highest probability?"), including manually defined knowledge and/or automatically derived knowledge from former evaluations.

In summary, therefore the embodiments disclosed herein allow or at least enhance an automated mass cloning of virtualized computing environments (virtual machines including an operation system and additional software components). So-called "blueprints" are conventionally used to work as the digital instructions for how to clone a computer environment. However, the current prior art does not identify any accurate prediction about whether a blueprint contains really all necessary information to allow for a successful cloning (because duplication is not enough in view of unique computer names, IP addresses within the same domain, database identifiers, etc.). In addition, the targeted environment is specialized on virtualization within a cloud environment. Here, also the accessibility (cloud readiness) of the environment has to be checked and proven. Thanks to the present invention, an improved predictability for the successful cloning is achieved i.e. the question is answered whether a specific environment / virtual machine can be used as a blueprint.

## Claims

1. A computer-implemented method for determining whether a virtual machine can be cloned within a cloud management platform without causing erroneous behaviour, the method comprising:
a. automatically identifying (1000; 2000) one or more properties of the virtual machine (1) which have changed after the virtual machine (1) has been cloned by the cloud management platform, the step of automatically identifying (1000; 2000) comprising:
- identifying (1010), by an evaluation agent software program, a set of properties (2) of the virtual machine (1) corresponding to a set of predetermined properties;
- automatically generating (2010) a plurality of clones of the virtual machine (1) using mechanisms provided by the cloud management platform;
- identifying (2020) a set of properties (3) for each clone corresponding to the set of predetermined properties;
- comparing the sets of properties (2, 3) to identify (2040), by the evaluation agent software program, one or more properties of the virtual machine (1) which have changed after the virtual machine (1) has been cloned by the cloud management platform; and
- based on the comparison, generating a list of changed properties including their corresponding property values in the virtual machine (1);
b. scanning (3010), by the evaluation agent software program, a file system of the virtual machine (1) to identify one or more configuration files of an application layer of the virtual machine (1);
c. generating (3040), by the evaluation agent software program, a list of indications (4) for erroneous behaviour, wherein the generating (3040) comprises:
for each identified configuration file, checking for occurrence of at least one of the property values in the list of changed properties, and
if such an occurrence is found, adding the corresponding configuration file to the list of indications (4); and
d. evaluating (4000) the list of indications (4), comprising automatically determining that the virtual machine (1) can be cloned within the cloud management platform, if the list of indications (4) is empty.

2. The method of any of the preceding claims, wherein the one or more properties of the virtual machine (1) comprise an operating system type, an operating system version, a list of installed applications, a service configuration and/or a network configuration.

3. The method of any of the preceding claims, wherein the step of scanning (3010) a file system of the virtual machine (1) comprises identifying one or more configuration files of an application layer of the virtual machine (1) based on one or more predetermined search patterns which indicate file names, file extensions and/or file paths.

4. The method of any of the preceding claims, wherein the step of scanning (3010) a file system of the virtual machine (1) comprises searching (3020) a database for formerly evaluated virtual machines and sorting (3030) the list of indications (4) such that configuration files with former indications are on top of the list of indications (4).

5. The method of any of the preceding claims, wherein the step of generating (3040) a list of indications (4) comprises sequentially processing the one or more configuration files until a predetermined threshold is reached, wherein the predetermined threshold comprises a maximum number of configuration files to be processed and/or a maximum time period.

6. The method of any of the preceding claims, wherein the step of evaluating (4000) the list of indications (4) comprises automatically setting (4010) at least one indication in the list of indications (4) to confirmed or falsified based on historical and/or statistical information.

7. The method of any of the preceding claims, further comprising automatically creating (4020) a re-configuration script for replacing at least one property of the virtual machine upon deployment.

8. The method of any of the preceding claims, comprising the step of automatically registering the virtual machine (1) as a blueprint within the cloud management platform when it is determined that the virtual machine (1) can be cloned within the cloud management platform.

9. A system for determining whether a virtual machine can be cloned within a cloud management platform without causing erroneous behaviour, the system comprising means for performing the steps of any method of claims 1-8.

10. A computer program product comprising instructions for implementing a method in accordance with any of the preceding claims 1-8.

## Patentansprüche

1. Ein computerimplementiertes Verfahren zum Bestimmen, ob eine virtuelle Maschine innerhalb einer Cloud-Verwaltungsplattform geklont werden kann, ohne ein fehlerhaftes Verhalten zu verursachen, wobei das Verfahren umfasst:
a. automatisches Identifizieren (1000; 2000) einer oder mehrerer Eigenschaften der virtuellen Maschine (1), die sich geändert haben, nachdem die virtuelle Maschine (1) von der Cloud-Verwaltungsplattform geklont worden ist, wobei der Schritt des automatischen Identifizierens (1000; 2000) umfasst:
- Identifizieren (1010) eines Satzes von Eigenschaften (2) der virtuellen Maschine (1), die einem Satz von vorbestimmten Eigenschaften entsprechen, durch ein Bewertungsagenten-Softwareprogramm;
- automatisches Erzeugen (2010) einer Vielzahl von Klonen der virtuellen Maschine (1) unter Verwendung von Mechanismen, die von der Cloud-Verwaltungsplattform bereitgestellt werden;
- Identifizieren (2020) eines Satzes von Eigenschaften (3) für jeden Klon, der dem Satz von vorbestimmten Eigenschaften entspricht;
- Vergleichen der Sätze von Eigenschaften (2, 3), um durch das Bewertungsagenten-Softwareprogramm eine oder mehrere Eigenschaften der virtuellen Maschine (1) zu identifizieren (2040), die sich geändert haben, nachdem die virtuelle Maschine (1) durch die Cloud-Verwaltungsplattform geklont worden ist; und
- basierend auf dem Vergleich, Erzeugen einer Liste von geänderten Eigenschaften einschließlich ihrer entsprechenden Eigenschaftswerte in der virtuellen Maschine (1);
b. Scannen (3010) eines Dateisystems der virtuellen Maschine (1) durch das Bewertungsagenten-Softwareprogramm, um eine oder mehrere Konfigurationsdateien einer Anwendungsschicht der virtuellen Maschine (1) zu identifizieren;
c. Erzeugen (3040) einer Liste von Hinweisen (4) auf fehlerhaftes Verhalten durch das Bewertungsagenten-Softwareprogramm, wobei das Erzeugen (3040) umfasst:
für jede identifizierte Konfigurationsdatei, Prüfen auf ein Vorkommen von mindestens einem der Eigenschaftswerte in der Liste der geänderten Eigenschaften, und
wenn ein solches Vorkommen gefunden wird, Hinzufügen der entsprechenden Konfigurationsdatei zu der Liste von Hinweisen (4); und
d. Auswerten (4000) der Liste von Hinweisen (4), umfassend automatisches Bestimmen, dass die virtuelle Maschine (1) innerhalb der Cloud-Verwaltungsplattform geklont werden kann, wenn die Liste von Hinweisen (4) leer ist.

2. Das Verfahren nach einem der vorhergehenden Ansprüche, wobei die eine oder mehreren Eigenschaften der virtuellen Maschine (1) einen Betriebssystemtyp, eine Betriebssystemversion, eine Liste der installierten Anwendungen, eine Dienstkonfiguration und/oder eine Netzwerkkonfiguration umfassen.

3. Das Verfahren nach einem der vorhergehenden Ansprüche, wobei der Schritt des Scannens (3010) eines Dateisystems der virtuellen Maschine (1) Identifizieren einer oder mehrerer Konfigurationsdateien einer Anwendungsschicht der virtuellen Maschine (1) basierend auf einem oder mehreren vorbestimmten Suchmustern umfasst, die Dateinamen, Dateierweiterungen und/oder Dateipfade angeben.

4. Das Verfahren nach einem der vorhergehenden Ansprüche, wobei der Schritt des Scannens (3010) eines Dateisystems der virtuellen Maschine (1) Durchsuchen (3020) einer Datenbank nach früher bewerteten virtuellen Maschinen und Sortieren (3030) der Liste von Hinweisen (4) umfasst, so dass Konfigurationsdateien mit früheren Hinweisen am Anfang der Liste von Hinweisen (4) stehen.

5. Das Verfahren nach einem der vorhergehenden Ansprüche, wobei der Schritt des Erzeugens (3040) einer Liste von Hinweisen (4) sequentielles Verarbeiten der einen oder mehreren Konfigurationsdateien umfasst, bis ein vorbestimmter Schwellenwert erreicht ist, wobei der vorbestimmte Schwellenwert eine maximale Anzahl von zu verarbeitenden Konfigurationsdateien und/oder eine maximale Zeitdauer umfasst.

6. Das Verfahren nach einem der vorangehenden Ansprüche, wobei der Schritt des Auswertens (4000) der Liste von Hinweisen (4) automatisches Setzen (4010) mindestens eines Hinweises in der Liste von Hinweisen (4) als bestätigt oder verfälscht basierend auf historischen und/oder statistischen Informationen umfasst.

7. Das Verfahren nach einem der vorhergehenden Ansprüche, ferner umfassend automatisches Erstellen (4020) eines Rekonfigurations-Skripts zum Ersetzen mindestens einer Eigenschaft der virtuellen Maschine bei Inbetriebnahme.

8. Das Verfahren nach einem der vorhergehenden Ansprüche, umfassend den Schritt des automatischen Registrierens der virtuellen Maschine (1) als Blueprint innerhalb der Cloud-Verwaltungsplattform, wenn festgestellt wird, dass die virtuelle Maschine (1) innerhalb der Cloud-Verwaltungsplattform geklont werden kann.

9. Ein System zum Bestimmen, ob eine virtuelle Maschine innerhalb einer Cloud-Verwaltungsplattform geklont werden kann, ohne ein fehlerhaftes Verhalten zu verursachen, wobei das System Mittel zum Ausführen der Schritte eines beliebigen Verfahrens der Ansprüche 1-8 umfasst.

10. Ein Computerprogrammprodukt, umfassend Anweisungen zum Implementieren eines Verfahrens nach einem der vorhergehenden Ansprüche 1-8.

## Revendications

1. Un procédé mis en œuvre par calculateur pour déterminer si une machine virtuelle peut ou non être clonée au sein d'une plateforme de gestion dématérialisée sans provoquer de comportement erroné, le procédé comprenant :
a. l'identification automatique (1000 ; 2000) d'une ou plusieurs propriétés de la machine virtuelle (1) qui ont changé après que la machine virtuelle (1) a été clonée par la plateforme de gestion dématérialisée, l'étape d'identification automatique (1000 ; 2000) comprenant :
- l'identification (1010), par un programme logiciel d'agent d'évaluation, d'un ensemble de propriétés (2) de la machine virtuelle correspondant à un ensemble de propriétés prédéterminées ;
- la génération automatique (2010) d'une pluralité de clones de la machine virtuelle (1) en utilisant des mécanismes fournis par la plateforme de gestion dématérialisée ;
- l'identification (2020) pour chaque clone d'un ensemble de propriétés (3) correspondant à l'ensemble de propriétés prédéterminées ;
- la comparaison des ensembles de propriétés (2, 3) pour identifier (2040), par le programme logiciel d'agent d'évaluation, une ou plusieurs propriétés de la machine virtuelle (1) qui ont changé après que la machine virtuelle (1) a été clonée par la plateforme de gestion dématérialisée ; et
- sur la base de la comparaison, la génération d'une liste de propriétés qui ont changé, incluant leurs valeurs de propriété correspondantes dans la machine virtuelle (1) ;
b. l'exploration (3010), par le programme logiciel d'agent d'évaluation, d'un système de fichiers de la machine virtuelle (1) pour identifier un ou plusieurs fichiers de configuration d'une couche applicative de la machine virtuelle (1) ;
c. la génération (3040), par le programme logiciel d'agent d'évaluation, d'une liste d'indications (4) pour comportement erroné, la génération (3040) comprenant :
pour chaque fichier de configuration identifié, la recherche d'une occurrence d'au moins l'une des valeurs de propriété dans la liste de propriétés qui ont changé, et
si une telle occurrence est trouvée, l'ajout du fichier de configuration correspondant à la liste d'indications (4) ; et
d. l'évaluation (4000) de la liste d'indications, comprenant la détermination automatique que la machine virtuelle (1) peut être clonée au sein de la plateforme de gestion dématérialisée, si la liste d'indications (4) est vide.

2. Le procédé de la revendication précédente, dans lequel les une ou plusieurs propriétés de la machine virtuelle (1) comprennent un type de système d'exploitation, une version de système d'exploitation, une liste d'applications installées, une configuration de service et/ou une configuration de réseau.

3. Le procédé de l'une des revendications précédentes, dans lequel l'étape d'exploration (3010) d'un système de fichiers de la machine virtuelle comprend l'identification d'un ou plusieurs fichiers de configuration d'une couche applicative de la machine virtuelle (1) sur la base d'un ou plusieurs profils de recherche prédéterminés qui indiquent des noms de fichier, des extensions de fichier et/ou des chemins de fichier.

4. Le procédé de l'une des revendications précédentes, dans lequel l'étape d'exploration (3010) d'un système de fichiers de la machine virtuelle (1) comprend la recherche (3020), dans une base de données, de machines virtuelles précédemment évaluées, et le tri (3030) de la liste d'indications (4) de telle sorte que les fichiers de configuration ayant des indications antérieures soient en tête de la liste d'indications (4).

5. Le procédé de l'une des revendications précédentes, dans lequel l'étape de génération (3040) d'une liste d'indications (4) comprend le traitement séquentiel des un ou plusieurs fichiers de configuration jusqu'à atteindre un seuil prédéterminé, le seuil prédéterminé comprenant un nombre maximal de fichiers de configuration à traiter et/ou un laps de temps maximal.

6. Le procédé de l'une des revendications précédentes, dans lequel l'étape d'évaluation (4000) de la liste d'indications (4) comprend le paramétrage automatique (4010) d'au moins une indication de la liste d'indications (4) en confirmée ou en falsifiée, sur la base d'informations historiques et/ou statistiques.

7. Le procédé de l'une des revendications précédentes, comprenant en outre la création automatique (4020) d'un script de reconfiguration destiné à remplacer au moins une propriété de la machine virtuelle au moment du déploiement.

8. Le procédé de l'une des revendications précédentes, comprenant l'étape d'enregistrement automatique de la machine virtuelle (1) en tant que schéma directeur au sein de la plateforme de gestion dématérialisée, lorsqu'il est déterminé que la machine virtuelle (1) peut être clonée au sein de la plateforme de gestion dématérialisée.

9. Un système pour déterminer si une machine virtuelle peut être clonée au sein d'une plateforme de gestion dématérialisée sans provoquer de comportement erroné, le système comprenant des moyens pour mettre en œuvre les étapes de l'un des procédés des revendications 1 à 8.

10. Un produit de programme informatique comprenant des instructions pour l'implémentation d'un procédé selon l'une des revendications 1 à 8 précédentes.
